(19) Europäisches Patentamt
European Patent Office
Office européen des brevets

(11) **EP 1 595 930 B1**

(12) **EUROPÄISCHE PATENTSCHRIFT**

(45) Veröffentlichungstag und Bekanntmachung des Hinweises auf die Patenterteilung:
**13.06.2012 Patentblatt 2012/24**

(51) Int Cl.:
***C09J 181/02*** (2006.01)

(21) Anmeldenummer: 05103105.2

(22) Anmeldetag: **19.04.2005**

(54) **UV-vernetzende Blockcopolymere**

Ultraviolet crosslinkable copolymers

Polymères séquencés réticulables par rayons ultraviolets

(84) Benannte Vertragsstaaten:
**DE ES FR GB IT**

(30) Priorität: **10.05.2004 DE 102004023637**

(43) Veröffentlichungstag der Anmeldung:
**16.11.2005 Patentblatt 2005/46**

(73) Patentinhaber: **TESA SE**
**20253 Hamburg (DE)**

(72) Erfinder: **Husemann, Marc Dr.**
**D-22559, Hamburg (DE)**

(74) Vertreter: **Stubbe, Andreas**
**tesa AG,**
**Kst. 9500 - Bf. 645,**
**Quickbornstrasse 24**
**20253 Hamburg (DE)**

(56) Entgegenhaltungen:
**EP-A- 1 081 205    US-A1- 2004 072 933**

EP 1 595 930 B1

**Beschreibung**

Die Erfindung betrifft ein Verfahren zur Herstellung von Haftklebemassen mittels mekaptan-geregelter radikalischer Polymerisation, Zwischenprodukte des Herstellungs-verfahrens und mit dem Verfahren hergestellte Haftklebemassen.

Blockcopolymere sind bereits seit langem bekannt. Sie haben sich für eine Vielzahl unterschiedlicher Anwendungen bewährt und sind entsprechend etabliert. So werden z.B. auf Basis von Kautschuken (z. B. Naturkautschuk oder Styrol-Butadien-Kautschuk) oder auf Basis von Styrolblockcopolymeren (SIS, SBS) Selbstklebebänder hergestellt. Eine Vielzahl von Selbstklebebändern enthält als Elastomerenkomponente Polyacrylate, deren Technologie bereits seit mehr als 40 Jahren bekannt ist. Diese Klebebänder weisen gegenüber Kautschuk-basierenden Klebebändern eine Vielzahl von Vorteilen auf. Diese beinhalten u. a. eine exzellente UV- und Lichtstabilität, eine hohe Resistenz gegenüber thermooxidativer Alterung, eine auf die jeweilige Anforderung einstellbare Polarität sowie typischerweise eine wasserklare Transparenz. Des weiteren besitzen Polyacrylathaftklebemassen, durch die in der Regel bei ihnen mögliche und vorgenommene Vernetzung der Polymerketten, auch bei höheren Anwendungstemperaturen eine gute Kohäsion und damit eine hohe Temperaturfestigkeit der Verklebungen. Ein weiterer Vorteil ist, dass Polyacrylathaftklebemassen bereits in reiner Form, d.h. ohne zusätzliche Additive wie z.B. Klebharze oder Weichmacher, haftklebrig sind.

Um den steigenden Anforderungen aus der Industrie an Polyacrylathaftklebemassen gerecht zu werden, sind in neuerer Zeit gezielt Polymerisationsverfahren zur Steuerung der Molekulargewichtsverteilung entwickelt worden (K. Matyjaszewski (Hrsg.), Controlled/Living Radical Polymerization, ACS Symposium Series, No. 768, ACS, Washington, 2000). Vorteilhaft lassen sich mit entsprechenden Polymerisationsverfahren synthetisierte Polyacrylate u. a. für aus der Schmelze beschichtbare Haftklebemassen nutzen (DE 100 30 217; DE 100 36 801; DE 101 49 084). Jedoch sind die Verbesserungen gering.

Klassische Ansätze zur Steuerung der Eigenschaften von Polyacrylathaftklebemassen beinhalten u.a. die Wahl von Art und Menge der eingesetzten Comonomere, die Einstellung von Molmasse und Molmassenverteilung der Polymere sowie Art und Stärke der Vernetzung der Polymere. Mit Hilfe der vorgenannten Einflussgrößen ist eine gezielte und präzise Steuerung des klebtechnischen Eigenschaftsprofils möglich.

Die EP 1 081 205 A beschreibt Epoxy-Klebmassen, bei denen die Epoxy-Komponente ganz oder teilweise durch eine Thiiran-Komponente substituiert ist. Bei der Klebemasse handelt es sich um eine hitzeaktivierbare Klebemasse und nicht um eine Haftklebemasse. Thiiran-Verbindungen sind nicht geeignet, als Regler für freie radikalische Polymerisationen zu fingieren, da sie keine Radikale stabilisieren können.

Die US 2004/072933 A beschreibt multifunktionelle Thiole als Klebkraftverstärker oder Primer für Polymere. Die multifunktionellen Thiole werden zur Herstellung oligomerer oder präpolymerer Vernetzer eingesetzt; diese Vernetzer werden dann mit Monomeren unter UV-Bestrahlung umgesetzt. Diese Art der Reaktionsführung unterscheidet sich von einer "klassischen" Vernetzungsreaktion bereits zuvor hergestellter Polymere. Ein kontrollierter Aufbau von Blockcopolymeren wird nicht beschrieben.

Ein weiterer Weg zu verbesserten Produkten ist die gezielte Synthese von Blockcopolymeren (N. Hadjichriszichis, S. Pispar, G.A. Floudas, Block Copolymers, Wiley, N.Y., 2003). Durch chemische Kopplung von thermodynamisch unverträglichen Polymerblöcken weisen entsprechende Blockcopolymere eine Mikrophasenseparation auf, d. h. thermodynamisch verträgliche Polymerblöcke assoziieren, während thermodynamisch unverträgliche in räumlich separate Bereiche segregieren, ohne dass jedoch eine makroskopische Phasentrennung auftritt. Es resultieren - je nach Zusammensetzung - Phasen unterschiedlicher Struktur. Aktuell in Haftklebemassen genutzte Blockcopolymere besitzen dabei typischerweise zwei oder mehr Polymerblöcke mit hoher Erweichungstemperatur (nachfolgend auch als Hartblock bezeichnet; realisiert durch eine entsprechend hohe Glasübergangstemperatur oder eine entsprechend hohe Kristallitschmelztemperatur) und wenigstens einen Block von niedriger Erweichungstemperatur (nachfolgend auch als Weichblock bezeichnet). Die Zusammensetzung in bislang eingesetzten Systemen ist so gewählt, dass die von den Weichblöcken gebildete Phase innerhalb der Haftklebemasse eine kontinuierliche Matrix ausbildet, welche die haftklebrigen Eigenschaften erst ermöglicht. Die bei hoher Temperatur erweichenden Polymerblöcke assoziieren bzw. segregieren zu typischerweise näherungsweise globulären Phasenbereichen (Domänen), welche in der kontinuierlichen Matrix der Weichphase dispergiert vorliegen und unterhalb ihrer Glasübergangs- bzw. Kristallitschmelztemperatur als physikalische Vernetzungspunkte fungieren (G. Holden, N. R. Legge, R. P. Quirk, H. E. Schroeder (Hrsg.), Thermoplastic Elastomers, 2. Aufl., 1996, C. Hanser Verlag, München). Vorteile von auf entsprechenden Blockcopolymeren basierenden Haftklebemassen beinhalten z. B. die Möglichkeit sehr hohe Scherfestigkeiten zu realisieren.

Die Systeme sind aber - durch die oben beschriebene ausgeprägte Phasenseparierung - schlecht aus der Schmelze beschichtbar. Daher wurden weitere Entwicklungen betrieben, um die Schmelzbereitschaft von Blockcopolymeren zu verbessern. Ein Weg sind z.B. die sogenannten Sternpolymere, die durch Ihre räumlich verzweigte Struktur eine geringere Fließviskosität gegenüber linearen Systemen gleicher Molmasse aufweisen. Viele von diesen Blockcopolymeren sind bereits beschrieben. Beispiele findet man in Japanese Official Patent Provisional Publication (Kokai) No. Showa 63-132914, in Japanese Official Patent Provisional Publication (Kokai) No. Heisei 3-190911 oder in Japanese Patent Publication (Kohyo) No. Heisei 5-500827. Ein weiterer Ansatz wurde in der EP 0 686 653 beschrieben. Dort werden polyvalente Merkaptane als Verbindungselemente in sternförmigen Blockcopolymeren beschrieben. Diese Materialien lassen sich sehr effizient aus der Schmelze beschichten. Ein genereller Nachteil dieser Systeme ist aber die relativ schlechte Lösungsmittelbeständigkeit, da nur ein physikalisches Netzwerk vorliegt.

Aufgabe der Erfindung ist es, Blockcopolymere zur Verfügung zu stellen, die sich leicht, also bei niedrigen Temperaturen, beschichten lassen, die aber dann derart vernetzt werden können, dass die vernetzten Produkte als Haftklebemassen verwendet werden können. Während des Beschichtungsprozesses sollen Zersetzungsprozesse weitgehend vermieden werden. Die Blockcopolymere sollten vorteilhaft orientierungsfrei beschichtbar sein.

Aufgabe der Erfindung ist es weiterhin, ein Verfahren zur Herstellung von Haftklebemassen auf Basis derartiger Blockcopolymere anzubieten.

Die Aufgaben werden überraschend und nicht vorhersehbar gelöst durch ein Verfahren, wie es im Anspruch 1 dargestellt ist. Die abhängigen Ansprüche 2 bis 5 betreffen bevorzugte Weiterentwicklungen des erfindungsgemäßen Verfahrens, die Ansprüche 6 bis 10 betreffen Haftklebemassen nach dem erfindungsgemäßen Verfahren.

Insbesondere konnte nicht erwartet werden, dass sich Blockcopolymere der nachfolgend genannten Art leicht, also bei niederen, schonenden Temperaturen beschichten lassen, nach einem Vernetzungsprozess durch UV-Strahlung aber trotzdem die für Haftklebemassen gewünschten Scherfestigkeiten aufweisen.

Die Erfindung betrifft somit ein Verfahren zur Herstellung von vernetzten Haftklebemassen zumindest zum Teil auf Basis von Blockcopolymeren, welche zumindest eine polyvalente Thioether-Einheit aufweisen, wobei mindestens die folgenden Verfahrensschritte durchgeführt werden:

- zwei- oder mehrstufige radikalische Polymerisation zumindest zweier copolymerisierbarer Monomere in Gegenwart zumindest eines polyvalenten Merkaptans, wobei zumindest eines der Monomere derart funktionalisiert ist, dass es bei Bestrahlung mit ultravioletten Strahlen eine UV-Vernetzung initiiert,
  wobei bei der Polymerisation als Polymerisat Blockcopolymere mit zumindest einem polyvalenten Thioether-Einheit entstehen,
- Beschichtung des Polymerisats aus der Schmelze auf einen permanenten oder temporären Träger,
- Vernetzung des Polymerisats auf dem Träger durch Bestrahlung mit ultravioletter Strahlung.

Als polyvalente Thioether-Einheit wird insbesondere ein Baustein bezeichnet, der mindestens zwei Thio-Einheiten - S - aufweist, wobei die Valenz mindestens der Anzahl der Thiothereinheiten entspricht. Polyvalente Thioethereinheiten können besonders bevorzugt aus einer "zentralen" Verknüpfungseinheit X, zum Beispiel in Form aliphatischer oder aromatischer Kohlenwasserstoffbausteinen, an die die entsprechende Zahl Schwefelatome gebunden ist, aufgebaut sein. Die zweite Bindung der Thioeinheit dient dann mindestens bei einem Teil der Thio-Einheiten zur Anknüpfung von (Co-)Polymer-bausteinen.

Ist die zweite Bindung zumindest eines Teils der Thioeinheiten durch Wasserstoff besetzt, so liegen die entsprechenden polyvalenten Merkaptane vor.

Das polyvalente Merkaptan ist somit eine Verbindung, die zwei oder mehrere Merkaptan-Gruppen pro Molekül trägt. So werden z.B. polyvalente Merkaptane mit zwei Merkaptan-Gruppen als zweibindige Merkaptane bezeichnet und mit drei Merkaptan-Gruppen als dreibindige Merkaptane bezeichnet.

Sehr vorteilhafte Beispiele für polyvalente Merkaptane sind z.B. : Diester aus Diolen, wie beispielsweise Ethylenglykol und 1,4-Butandiol, Carboxyl-Gruppen enthaltende Merkaptane, Polyester mit drei oder mehreren Hydroxygruppen, wie z.B. Trimethylolpropan, Pentaerithrol, Dipentaerithrol, Verbindungen mit drei oder mehreren Merkaptan-Gruppen, wie z.B. Trithioglyzerol, Triazin Polythiole, wie z.B. 2-Di-n-butylamino-4,6-dimerkapto-s-triazin und 2,4,6-Trimerkapto-s-triazin, Verbindungen bestehend aus einem Reaktionsprodukt von Schwefelwasserstoff und zwei bzw. mehreren Epoxygruppen aus polyvalenten Epoxiden, Estern aus polyvalenten Carbonsäuren, wobei die Carbonsäuregruppen entsprechend umgeestert wurden mit z.B. Merkaptoethanol oder ähnlichen Verbindungen.

Diese obengenannten Verbindungen können zur Polymerisation allein oder in Verbindung miteinander eingesetzt werden. Die Polymerisation wird geregelt über die polyvalenten Merkaptan-Gruppen, wobei bevorzugt Verbindungen mit 3 bis 6 Merkaptan-Gruppen eingesetzt werden.

Beispiele für 3-bindige Merkaptane sind: Trithioglyzerol, Trimethylolpropan trithioglykolat und Trimethylolpropan trithiopropionat

Beispiele für 4-bindige Merkaptane sind: Pentaerithrol tetrakisthioglykolat und Pentaerithrol tetrakisthiopropionat.

Beispiele für 6-bindige Merkaptane sind: Dipentaerithrol hexakisthioglykolat und Dipentaerithrol hexakisthiopropionat.

Zur Herstellung der Haftklebemassen werden zunächst als Zwischenprodukt Blockcopolymere hergestellt. Diese werden vorteilhaft über konventionelle radikalische Polymerisationen dargestellt. Zur Initiierung der radikalisch verlaufenden Polymerisationen werden bevorzugt radikalische Initiatorsysteme eingesetzt, die, insbesondere thermisch zerfallende, radikalbildende Azo- oder Peroxo-Initiatoren beinhalten. Prinzipiell eignen sich alle für Vinylverbindungen dem Fachmann geläufigen, üblichen Initiatoren. Die Produktion von C-zentrierten Radikalen ist im Houben Weyl, Methoden der Organischen Chemie, Vol. E 19a, S. 60 - 147 beschrieben. Diese Methoden werden in bevorzugter Weise in Analogie angewendet.

Beispiele für Radikalquellen sind Peroxide, Hydroperoxide und Azoverbindungen, als einige nicht ausschließliche Beispiele für typische und hier einsetzbare Radikalinitiatoren seien genannt Kaliumperoxodisulfat, Dibenzoylperoxid, Cumolhydroperoxid, Cyclohexanonperoxid, Di-t-butylperoxid, Azodiisosäurebutyronitril, Cyclohexylsulfonyl-acetylperoxid, Diisopropyl-percarbonat, t-Butylperoktoat, Benzpinacol. Sehr bevorzugt wird als radikalischer Initiator 1,1'-Azo-bis-(cyclohexancarbonsäurenitril) (Vazo 88™ der Fa. DuPont) oder Azodisobutyronitril (AIBN) verwendet.

Erfindungsgemäß werden die Blockcopolymere in einem zumindest zweistufigen Prozess hergestellt. In einem ersten Schritt wird das polyvalente Merkaptan mit einem oder mehreren ersten Monomeren A und optional mit zweiten Monomeren C gemischt. Anschließend wird die radikalische Polymerisation in Gegenwart des polyvalenten Merkaptans intiiert.

Nach Vollendung der ersten Polymerisation werden dritte Monomere B, optional zweite Monomere C hinzugegeben. Im zweiten Schritt wird dann wiederum die Polymerisation der Monomere B und gegebenenfalls C durchgeführt. Der zweistufige Prozess kann kontinuierlich ablaufen, kann aber auch nach dem ersten Schritt unterbrochen werden und durch erneute Zugabe von Initiatoren (insbeosndere der oben genannten thermischen Initiatoren) reinitiiert werden.

Die Polymerisation kann in Substanz, in Gegenwart eines oder mehrerer organischer Lösungsmittel, in Gegenwart von Wasser oder in Gemischen aus organischen Lösungsmitteln und Wasser durchgeführt werden. Es wird dabei angestrebt, die verwendete Lösungsmittelmenge so gering wie möglich zu halten. Geeignete organische Lösungsmittel sind reine Alkane (z.B. Hexan, Heptan, Octan, Isooctan), aromatische Kohlenwasserstoffe (z.B. Benzol, Toluol, Xylol), Ester (z.B. Essigsäureethylester, Essigsäurepropyl-, -butyl- oder -hexylester), halogenierte Kohlenwasserstoffe (z.B. Chlorbenzol), Alkanole (z.B. Methanol, Ethanol, Ethylenglycol, Ethylenglycolmonomethylether) und Ether (z.B. Diethylether, Dibutylether) oder Gemische davon. Die wäßrigen Polymerisationsreaktionen können mit einem mit Wasser mischbaren oder hydrophilen Colösungsmittel versetzt werden, um zu gewährleisten, dass das Reaktionsgemisch während des Monomerumsatzes in Form einer homogenen Phase vorliegt. Vorteilhaft verwendbare Colösungsmittel für die vorliegende Erfindung werden gewählt aus der folgenden Gruppe, bestehend aus aliphatischen Alkoholen, Glycolen, Ethern, Glycolethern, Pyrrolidinen, N-Alkylpyrrolidinonen, N-Alkylpyrrolidonen, Polyethylenglycolen, Polypropylenglycolen, Amiden, Carbonsäuren und Salzen davon, Estern, Organosulfiden, Sulfoxiden, Sulfonen, Alkoholderivaten, Hydroxyetherderivaten, Aminoalkoholen, Ketonen und dergleichen, sowie Derivaten und Gemischen davon.

Die Polymerisationszeit je Polymerisationsschritt wird vorteilhaft - je nach Umsatz und Temperatur - zwischen 4 und 72 Stunden gewählt. Je höher die Reaktionstemperatur gewählt werden kann, das heißt, je höher die thermische Stabilität des Reaktionsgemisches ist, desto geringer kann die Reaktionsdauer gewählt werden.

Zur Initiierung der Polymerisation ist für die thermisch zerfallenden Initiatoren der Eintrag von Wärme essentiell. Die Polymerisation kann für die thermisch zerfallenden Initiatoren durch Erwärmen auf 50 bis 160 °C, je nach Initiatortyp, initiiert werden.

Bei den durch zwei- oder mehrstufige radikalische Polymerisation zumindest zweier copolymerisierbarer Monomere in Gegenwart zumindest eines polyvalenten Merkaptans erhältlichen Blockcopolymere ist zumindest eines der Monomere derart funktionalisiert, dass es bei Bestrahlung mit ultravioletten Strahlen eine UV-Vernetzung initiiert.

Insbesondere lassen sich die Blockcopolymere durch die allgemeine Strukturformel

$$[R_{1,i} - P_{1,i} - S]_n - X - [S - P_{2,j} - R_{2,j}]_m$$

darstellen,

wobei i eine Laufzahl von 1 bis n und j eine Laufzahl von 1 bis m ist und n und m jeweils ganze Zahlen darstellen,
wobei $P_{1,i}$ Polymersegmente aus einer Monomergruppe enthaltend erste Monomere A und/oder Copolymersegmente aus einer Monomergruppe enthaltend erste Monomere A und dritte Monomere C sind,
wobei die i Segmente $P_1$ unterschiedliche Längen und unterschiedliche chemische Zusammensetzungen aufweisen können,
wobei $P_{2,j}$ Polymersegmente aus einer Monomergruppe enthaltend zweite Monomere B und/oder Copolymersegmente aus einer Monomergruppe enthaltend zweite Monomere B und dritte Monomere C sind, wobei die j Segmente $P_2$ unterschiedliche Längen und unterschiedliche chemische Zusammensetzungen aufweisen können,
mit der Maßgabe, dass mindestens eines der Segmente $P_{1,i}$ und/oder $P_{2,i}$ einpolymerisierte Monomere C aufweist,
$R_{1,i}$ und $R_{2,j}$ die Segmente $P_{1,i}$ und $P_{2,j}$ abschließende Reste sind,
wobei weiterhin X eine Verknüpfungseinheit ist, wobei $X(S)_{n+m}$ eine polyvalente Thioethereinheit darstellt, wobei die Valenz mindestens n + m beträgt,
dadurch gekennzeichnet, dass die Monomere C funktionelle Gruppen beinhalten, die bei Bestrahlung mit ultravioletten Strahlen eine UV-Vernetzung initiieren.

Das gewichtsmittlere Molekulargewicht $M_w$ der Blockcopolymere liegt bevorzugt zwischen 2.000 und 4.000.000, besonders zwischen 20.000 und 1.000.000, ganz besonders zwischen 50.000 und 500.000.

Insbesondere können die Reste R durch Monomere oder deren Fragmente, Initiatoren oder deren Fragmente, weitere Polymerblöcke oder weitere Thiogruppen gebildet werden. Die Thiogruppen können dabei die Verknüpfungsstellen zu weiteren Bausteinen der oben angeführten Strukturformel darstellen.

Die Segmente werden im folgenden auch Polymerblöcke genannt. Die Segmente $P_{1,i}$ können dabei insbesondere Homopolymersegmente P(A) aus den Monomeren A und/oder Copolymersegmente P(A/C) aus den Monomeren A und C sein; die Segmente $P_{2,j}$ sind vorteilhaft insbesondere Homopolymersegmente P(B) und/oder Copolymersegmente P(B/C).

Die Polymersegmente $P_{1,i}$ und/oder $P_{2,j}$ besitzen jeweils bevorzugt ein mittleres Molekulargewicht $M_w$ von 1.000 bis 2.000.000 g/mol, mehr bevorzugt ein mittleres Molekulargewicht $M_w$ von 10.000 bis 500.000 g/mol.

P(A/C) und P(A) unterscheiden sich in ihrer chemischen Zusammensetzung von P(B/C) und P(B). Die Unterschiede werden erreicht durch den Einsatz unterschiedlicher Monomere A und B oder durch unterschiedliche eingesetzte Monomergemische A und B.

Beispiele für unterschiedliche Zusammensetzungen werden gegeben durch:

a) Polymersegmente mit unterschiedlichen Glasübergangstemperaturen oder Erweichungstemperaturen
b) Polymersegmente mit unterschiedliche Kompatibilität
c) Polymersegemente bestehend aus Polymeren mit unterschiedlichen Löslichkeiten

Vorteilhaft sind die Polymerblöcke $P_{1,i}$ und $P_{2,j}$ bei Raumtemperatur RT nicht homogen miteinander mischbar.

Die nicht vernetzten Polymerisationsprodukte weisen vorteilhaft mindestens zwei Glasübergangstemperaturen auf, von denen zumindest die eine nicht höher als + 15 ° C liegt und die sich um mindestens 15 °C voneinander unterscheiden. (Angaben der Glasübergangstemperaturen in dieser Schrift bezogen auf die Messung aus dem lösungsmittelfreien System; das heißt bei einem Lösungsmittelgehalt von nicht mehr als 1 Gew.-%; gegebenenfalls also nach Aufkonzentration).

In bevorzugter Weise (/ 1 /) werden die Polymersegmente P(A) bzw. P(A/C) und P(B) bzw. P(B/C) dermaßen gewählt, dass

- die Polymerblöcke P(A) und/oder P(A/C) eine Erweichungstemperatur im Bereich von +20 °C bis + 175°C aufweisen,
- die Polymerblöcke P(B) und/oder P(B/C) eine Erweichungstemperatur im Bereich von -130°C bis + 10 °C aufweisen,

und

- die Polymerblöcke P(A) und P(A/C) mit P(B) und P(B/C) bei Raumtemperatur nicht homogen miteinander mischbar sind,

und/oder

- die Polymerblöcke P(A) und P(B/C) mit P(B) und P(A/C) bei Raumtemperatur nicht homogen miteinander mischbar sind.

Unter Erweichungstemperatur wird in diesem Zusammenhang bei amorphen Systemen die Glasübergangstemperatur und bei semikristallinen Polymeren die Schmelztemperatur verstanden. Glastemperaturen werden als Ergebnisse aus quasistatischen Verfahren wie z. Differential Scanning Calorimetry (DSC) angegeben.

Im folgenden werden die Polymerblöcke P(A) und P(A/C) auch als "Hartblöcke" und die Polymerblöcke P(B) und P(B/C) auch als "Elastomerblöcke" bezeichnet.

In einer weiteren bevorzugten Vorgehensweise (/ 2 /) werden die Polymersegmente P(A) bzw. P(A/C) und P (B) bzw. P(B/C) dermaßen gewählt, dass

- die Polymerblöcke P(A) und/oder P(A/C) eine Erweichungstemperatur im Bereich von 130°C bis + 25 °C aufweisen,
- die Polymerblöcke P(B) und/oder P(B/C) eine Erweichungstemperatur im Bereich von -130 °C bis + 25°C aufweisen,

und

- die Polymerblöcke P(A) und P(A/C) mit P(B) und P(B/C) bei Raumtemperatur nicht homogen miteinander mischbar sind,

und/oder

- die Polymerblöcke P(A) und P(B/C) mit P(B) und P(A/C) bei Raumtemperatur nicht homogen miteinander mischbar sind.

In einer weiteren bevorzugten Vorgehensweise (/ 3 /) werden die Polymersegmente P(A) bzw. P(A/C) und P(B) bzw. P(B/C) dermaßen gewählt, dass

- die Polymerblöcke P(A) und/oder P(A/C) eine Erweichungstemperatur im Bereich von 10 °C bis + 175°C aufweisen,
- die Polymerblöcke P(B) und/oder P(B/C) eine Erweichungstemperatur im Bereich von 10°C bis + 175 °C aufweisen,

und

- die Polymerblöcke P(A) und P(A/C) mit P(B) und P(B/C) nicht homogen miteinander mischbar sind,

und/oder

- die Polymerblöcke P(A) und P(B/C) mit P(B) und P(A/C) nicht homogen miteinander mischbar sind.

Für den Fall, dass die Polymerblöcke P(B) und/oder P(B/C) eine Erweichungstemperatur im Bereich von -130°C bis + 10 °C aufweisen, werden für die Blöcke P(B) bzw. P(B/C) vorteilhaft als Monomere B Acrylmonomere eingesetzt. Hierfür sind prinzipiell alle dem Fachmann geläufigen Acrylverbindungen, welche sich zur Synthese von Polymeren eignen, einsetzbar. Bevorzugt werden solche Monomere B gewählt, welche Glasübergangstemperaturen der Polymerblöcke P(B) bzw. P(B/C) auch in Kombination mit einem oder mehreren weiteren Monomeren von kleiner +10°C bedingen. Entsprechend können bevorzugt die Vinylmonomere gewählt werden.

Für die Präparation der Polymerblöcke P(B) bzw. P(B/C) werden dann vorteilhaft zu 75 bis 100 Gew.-% Acrylsäure- und/oder Methacrylsäurederivate der allgemeinen Struktur

$$CH_2=C(R^1)(COOR^2) \qquad (-I-)$$

eingesetzt, wobei $R^1$ = H oder $CH_3$ und $R^2$ = H oder lineare, verzweigte oder ringförmige, gesättigte oder ungesättigte Alkylreste mit 1 bis 30, insbesondere mit 4 bis 18 Kohlenstoffatomen darstellt, und/oder bis zu 25 Gew.-% Vinylverbindungen (-II-), welche günstigenfalls funktionelle Gruppen enthalten.

Acrylmonomere, die sehr bevorzugt im Sinne der Verbindung (-I-) als Komponenten für Polymerblöcke P(B) oder P(B/C) eingesetzt werden, umfassen Acryl- und Methacrylsäureester mit Alkylgruppen bestehend aus 4 bis 18 C-Atomen. Spezifische Beispiele für entsprechende Verbindungen sind, ohne sich durch diese Aufzählung einschränken zu wollen, n-Butylacrylat, n-Pentylacrylat, n-Hexylacrylat, n-Heptylacrylat, n-Octylacrylat, n-Nonylacrylat, Laurylacrylat, Stearylacrylat, Stearylmethacrylat, deren verzweigte Isomere, wie z.B. 2-Ethylhexylacrylat und Isooctylacrylat sowie cyclische Monomere wie z.B. Cyclohexyl- oder Norbornylacrylat und Isobornylacrylat.

Weiterhin können optional als Monomere im Sinne der Definition (-II-) für Polymerblöcke P(B) bzw. P(B/C) Vinylmonomere aus den folgenden Gruppen eingesetzt werden: Vinylester, Vinylether, Vinylhalogenide, Vinylidenhalogenide, sowie Vinylverbindungen, die aromatische Zyklen und Heterozyklen in α-Stellung enthalten. Auch hier seien beispielhaft ausgewählte erfindungsgemäß einsetzbare Monomere genannt: Vinylacetat, Vinylformamid, Vinylpyridin, Ethylvinylether, 2-Ethylhexylvinylether, Butylvinylether, Vinylchlorid, Vinylidenchlorid, Acrylnitril.

Als besonders bevorzugte Beispiele für vinylgruppenhaltige Monomere im Sinne der Definition (-II-) für die Weichblöcke P(B) bzw. P(B/C) eignen sich weiterhin Hydroxyethylacrylat, Hydroxypropylacrylat, Hydroxyethylmethacrylat, Hydroxypropylmethacrylat, N-Methylolacrylamid, Acrylsäure, Methacrylsäure, Allylalkohol, Maleinsäureanhydrid, Itaconsäureanhydrid, Itaconsäure, Acrylamid und Glycidylmethacrylat, um nur einige zu nennen.

In einer bevorzugten Ausführungsform der erfinderischen Systeme enthält einer der oder enthalten mehrere der Polymerblöcke P(A) bzw. P(A/C) und P(B) bzw. P(B/C) eine oder mehrere aufgepfropfte Seitenketten. Dabei wird nicht eingeschränkt, ob solche Systeme durch einen *graft-from-* (Aufpolymerisation einer Seitenketten ausgehend von einem bestehenden Polymerrückgrat) oder *graft-to-*Prozeß (Anbindung von Polymerketten an ein Polymerrückgrat über polymeranaloge Reaktionen) erhalten werden. Insbesondere zur Herstellung solcher Blockcopolymere können als Monomere B derartig funktionalisierte Monomere eingesetzt werden, die einen *graft-from-*Prozeß zum Aufpfropfen von Seitenketten ermöglichen. Hier sind insbesondere Acryl- und Methacrylmonomere zu nennen, die als Funktionalisierung Halogene tragen oder alle anderen funktionellen Gruppen, die beispielsweise einen ATRP-Prozeß (Atom Transfer Radical Polymerization) erlauben. In diesem Zusammenhang sei auch die Möglichkeit genannt, über Makromonomere gezielt Seitenketten in die Polymerketten einzuführen. Die Makromonomere können wiederumentsprechend aufgebaut sein.

In einer vorteilhaften Ausführung dieser Erfindung sind eine oder mehrere funktionelle Gruppen in die Polymerblöcke P(A) bzw. P(A/C) und P(B) bzw. P(B/C) eingebaut, die eine strahlenchemische Vernetzung der Polymerblöcke insbesondere mittels UV-Bestrahlung oder durch Bestrahlung mit Elektronen (Elektronenstrahlhärtung) erlauben. Als Monomereinheiten können mit dieser Zielsetzung insbesondere Acrylester genutzt werden, welche einen ungesättigten Alkylrest mit 3 bis 18 Kohlenstoffatomen enthalten, der mindestens eine Kohlenstoff-Kohlenstoff-Doppelbindung enthält. Für mit Doppelbindungen modifizierte Acrylate eignen sich besonders vorteilhaft Allylacrylat und acrylierte Zimtsäureester. Neben Acrylmonomeren lassen sich sehr vorteilhaft als Monomere für den Polymerblock P(B) bzw. P(B/C) auch Vinylverbindungen mit während der (radikalischen) Polymerisation des Polymerblockes P(B) bzw. P(B/C) nicht reaktiven Doppelbindungen einsetzen. Besonders bevorzugte Beispiele für entsprechende Comonomere sind Isopren und/oder Butadien, aber auch Chloropren.

Für den Fall, dass die Polymerblöcke P(A) und/oder P(A/C) eine Erweichungstemperatur im Bereich von 10 °C bis + 175 °C aufweisen, werden die Ausgangsmonomere A für die Polymerblöcke P(A) bzw. P(A/C) bevorzugt derart ausgewählt, daß die resultierenden Polymerblöcke P(A) bzw. P(A/C) mit den Polymerblöcken P(B) bzw. P(B/C) nicht mischbar sind und dementsprechend Mikrophasenseparation eintritt. Vorteilhafte Beispiele für Verbindungen, welche als Monomere A eingesetzt werden, sind Vinylaromaten, wie z.B. Styrol, die auch alkyliert sein können, Methylmethacrylate, wie z.B. Cyclohexylmethacrylat und Isobornylmethacrylat und Acrylate, wie z.B. Isobornylacrylat. Weitere Beispiele umfassen Vinylverbindunge mit aromatischen Kerne aus $C_4$ bis $C_{18}$ bestehend, die auch Heteroatome enthalten können. Besonders bevorzugte Beispiele sind 4-Vinylpyridin, N-Vinylphthalimid, Methylstyrol, 3,4-Dimethoxystyrol, 4-Vinylbenzoesäure, Benzylacrylat, Benzylmethacrylat, Phenylacrylat, Phenylmethacrylat, t-Butylphenylacrylat, t-Butylphenylmethacrylat, 4-Biphenylacrylat und -methacrylat, 2-Naphthylacrylat und - methacrylat sowie Mischungen aus denjenigen Monomeren, wobei diese Aufzählung nicht abschließend ist.

Besonders bevorzugte Beispiele sind Methylmethacrylat und Styrol.

Weiterhin können die Polymerblöcke P(A) bzw. P(A/C) aber auch als Copolymer aufgebaut sein, das zu mindestens 60 % aus den vorstehenden Monomeren A, das zu einer hohen Erweichungstemperatur führt, oder einem Gemisch dieser Monomere bestehen kann, aber bis zu 40 % Monomere B wie vorstehend definiert enthält, die zu einer Erniedrigung der Erweichungstemperatur des Polymerblocks P(A) bzw. P(A/C) führen. In diesem Sinne seien beispielhaft aber nicht ausschließlich Alkylacrylate genannt, die entsprechend dem zu den Monomeren B gesagten definiert sind.

In einer weiteren günstigen Vorgehensweise werden die Polymerblöcke P(A) bzw. P(A/C) und/oder P(B) bzw. P(B/C) derart funktionalisiert, dass eine thermisch initiierte Vernetzung durchgeführt werden kann. Als (thermische) Vernetzer können unter anderem in günstiger Weise gewählt werden: Epoxide, Aziridine, Isocyanate, Polycarbodiimide und Metallchelate, um nur einige zu nennen.

Für den Fall, dass die Polymerblöcke P(B) und/oder P(B/C) eine Erweichungstemperatur im Bereich von 10 °C bis + 175 °C aufweisen, werden die Ausgangsmonomere B für die Polymerblöcke P(B) bzw. P(B/C) bevorzugt derart ausgewählt, dass die resultierenden Polymerblöcke P(B) bzw. P(B/C) mit den Polymerblöcken P(A) bzw. P(A/C) nicht mischbar sind und dementsprechend (bei Raumtemperatur) Mikrophasenseparation eintritt. Vorteilhafte Beispiele für Verbindungen, welche als Monomere B eingesetzt werden, sind Vinylaromaten, wie z.B. Styrol, die auch alkyliert sein können, Methylmethacrylate, wie z.B. Cyclohexylmethacrylat und Isobornylmethacrylat und Acrylate, wie z.B. Isobornylacrylat. Weitere Beispiele umfassen Vinylverbindungen mit aromatischen Kerne aus $C_4$ bis $C_{18}$ bestehend, die auch Heteroatome enthalten können. Besonders bevorzugte Beispiele sind 4-Vinylpyridin, N-Vinylphthalimid, Methylstyrol, 3,4-Dimethoxystyrol, 4-Vinylbenzoesäure, Benzylacrylat, Benzylmethacrylat, Phenylacrylat, Phenylmethacrylat, t-Butylphenylacrylat, t-Butylphenylmethacrylat, 4-Biphenylacrylat und -methacrylat, 2-Naphthylacrylat und -methacrylat sowie Mischungen aus denjenigen Monomeren, wobei diese Aufzählung nicht abschließend ist.

Für den Fall, dass die Polymerblöcke P(A) und/oder P(A/C) eine Erweichungstemperatur im Bereich von -130°C bis + 25 °C aufweisen, werden für die Blöcke P(A) bzw. P(A/C) vorteilhaft Acrylmonomere eingesetzt. Hierfür sind prinzipiell alle dem Fachmann geläufigen Acrylverbindungen, welche sich zur Synthese von Polymeren eignen, einsetzbar. Bevorzugt werden solche Monomere gewählt, welche Glasübergangstemperaturen der Polymerblöcke P(A) bzw. P(A/C) auch in Kombination mit einem oder mehreren weiteren Monomeren von kleiner +25°C bedingen. Entsprechend können bevorzugt die Vinylmonomere gewählt werden.

Für die Präparation der Polymerblöcke P(A) bzw. P(A/C) werden dann vorteilhaft zu 75 bis 100 Gew.-% Acrylsäure- und/oder Methacrylsäurederivate, wie oben bei der allgemeinen Struktur -I- definiert wurde, eingesetzt, wobei $R^1$ = H oder $CH_3$ und $R^2$ = H oder lineare, verzweigte oder ringförmige, gesättigte oder ungesättigte Alkylreste mit 1 bis 30, insbesondere mit 4 bis 18 Kohlenstoffatomen darstellt, und/oder bis zu 25 Gew.-% Vinylverbindungen, ebenfalls wie für -II- definiert, welche günstigenfalls funktionelle Gruppen enthalten.

Acrylmonomere, die dann sehr bevorzugt im Sinne der Verbindung -I- als Komponenten für Polymerblöcke P (A) oder P(A/C) eingesetzt werden, umfassen Acryl- und Methacrylsäureester mit Alkylgruppen bestehend aus 4 bis 18 C-Atomen. Spezifische Beispiele für entsprechende Verbindungen sind, ohne sich durch diese Aufzählung einschränken zu wollen, n-Butylacrylat, n-Pentylacrylat, n-Hexylacrylat, n-Heptylacrylat, n-Octylacrylat, n-Nonylacrylat, Laurylacrylat, Stearylacrylat, Stearylmethacrylat, deren verzweigte Isomere, wie z.B. 2-Ethylhexylacrylat und Isooctylacrylat sowie cyclische Monomere wie z.B. Cyclohexyl- oder Norbornylacrylat und Isobornylacrylat.

Weiterhin können optional als Monomere entsprechend der Definition für -II- für Polymerblöcke P(A) bzw. P (A/C) Vinylmonomere aus den folgenden Gruppen eingesetzt werden: Vinylester, Vinylether, Vinylhalogenide, Vinylidenhalogenide, sowie Vinylverbindungen, die aromatische Zyklen und Heterozyklen in α-Stellung enthalten. Auch hier seien beispielhaft ausgewählte erfindungsgemäß einsetzbare Monomere genannt: Vinylacetat, Vinylformamid, Vinylpyridin, Ethylvinylether, 2-Ethylhexylvinylether, Butylvinylether, Vinylchlorid, Vinylidenchlorid, Acrylnitril.

Als besonders bevorzugte Beispiele für vinylgruppenhaltige Monomere entsprechend der Definition für -II- für die Weichblöcke P(A) bzw. P(A/C) eignen sich weiterhin Hydroxyethylacrylat, Hydroxypropylacrylat, Hydroxyethylmethacrylat, Hydroxypropyl-methacrylat, n-Methylolacrylamid, Acrylsäure, Methacrylsäure, Allylalkohol, Maleinsäure-anhydrid, Itaconsäureanhydrid, Itaconsäure, Acrylamid und Glycidylmethacrylat, um nur einige zu nennen.

Als Monomere C werden generell in einer sehr bevorzugten Auslegung Photoinitiatoren mit einer copolymerisierbaren Doppelbindung eingesetzt. Als Photoinitiatoren sind hervorragen solche des Norrish-I- und/oder des Norrish-II-Typs geeignet. Bei der Norrish-Typ-I-Reaktion handelt es sich um eine Photofragmentierung (α-Spaltung); die Norrish-Typ-II-Reaktion ist eine intramolekulare Variante der H-Abstraktionsreaktionen, wie sie in vielfältiger Weise bei photochemischen Reaktionen auftreten. Beispiele für entsprechende Photoinitiatoren sind z.B. Benzoinacrylat und ein acryliertes Benzophenon der Fa. UCB (Ebecryl P 36®).

Im Prinzip können alle dem Fachmann bekannten Photoinitiatoren copolymerisiert werden, die das Polymer über einen Radikalmechanismus unter UV-Bestrahlung vernetzen können und zur Copolymerisation geeignete funktionelle Zentren aufweisen. Ein Überblick über mögliche einsetzbare Photoinitiatoren, die insbesondere mit einer Doppelbindung funktionalisiert werden können, wird in Fouassier: "Photoinititation, Photopolymerization and Photocuring: Fundamentals and Applications", Hanser-Verlag, München 1995, gegeben. Ergänzend kann Carroy et al. in "Chemistry and Technology of UV and EB Formulation for Coatings, Inks and Paints", Oldring (Hrsg.), 1994, SITA, London zu Rate gezogen. Die dort genannten Photoinitiatoren seien explizit Bestandteil der Offenbarung dieser Anmeldung.

Beispiele für UV-photoaktive Gruppen, sind z. B. Benzophenon-, Acetophenon-, Benzil-, Benzoin-, Hydroxyalkylphenon-, Phenylcyclohexylketon-, Anthrachinon-, Trimethylbenzoylphosphinoxid-, Methylthiophenylmorpholinketone, Aminoketon-, Azobenzoin-, Thioxanthon-, Hexarylbisimidazole, Triazin-, or Fluorenon, wobei jede Gruppe noch zusätzliche Funktionalitäten, wie z.B. Halogene, Aminogruppen oder Hydroxygruppen tragen kann.

Der Anteil der Polymerblöcke P(A) bzw. P(A/C) am jeweiligen Blockcopolymer liegt vorteilhaft zwischen 5 und 49 Gewichtsprozent, bevorzugt zwischen 7,5 und 35 Gewichtsprozent, besonders bevorzugt zwischen 10 und 30 Gewichtsprozent.

Für Weiterverarbeitung der Blockcopolymere zur Haftklebemasse werden die Monomere A bzw. B dermaßen gewählt, dass die resultierenden Polymere bei Raumtemperatur oder höheren Temperaturen haftklebende Eigenschaften aufweisen, insbesondere entsprechend des "Handbook of Pressure Sensitive Adhesive Technology" von Donatas Satas (van Nostrand, New York 1989). Zur Weiterverarbeitung der Blockcopolymere zu zähelastifizierten Thermoplasten werden die Monomere A bzw. B dermaßen gewählt; daß die resultierenden Polymere bei Raumtemperatur oder höheren Temperaturen keine Anfassklebrigkeit besitzen.

Zur Erzielung bevorzugter Glasübergangstemperaturen $T_G$ der Polymere werden entsprechend dem vorstehend gesagten die Monomere sehr bevorzugt derart ausgesucht und die mengenmäßige Zusammensetzung der Monomermischung vorteilhaft derart gewählt, dass sich nach der *Fox*-Gleichung (G1) (vgl. T.G. Fox, Bull. Am. Phys. Soc. 1 (1956) 123) der gewünschte $T_G$-Wert für das Polymer ergibt.

$$\frac{1}{T_G} = \sum_n \frac{w_n}{T_{G,n}} \qquad (G1)$$

Hierin repräsentiert n die Laufzahl über die eingesetzten Monomere, $W_n$ den Massenanteil des jeweiligen Monomers n (Gew.-%) und $T_{G,n}$ die jeweilige Glasübergangstemperatur des Homopolymers aus den jeweiligen Monomeren n in K.

Die Polymerisation kann im ersten Schritt zu unterschiedlichen Umsätzen durchgeführt werden. In einer bevorzugten Auslegung wird im ersten Polymerisationsschritt ein Umsatz von größer 50 %, mehr bevorzugt von größer 80 % erreicht. In dem zweiten Polymerisationsschritt wird bevorzugt ein Umsatz von größer 95 % erreicht.

Zur Weiterentwicklung können den Blockcopolymeren Harze beigemischt werden. Als zuzusetzende klebrigmachende Harze sind ausnahmslos alle vorbekannten und in der Literatur beschriebenen Klebharze einsetzbar. Genannt seien stellvertretend die Pinen-, Inden- und Kolophoniumharze, deren disproportionierte, hydrierte, polymerisierte, veresterte Derivate und Salze, die aliphatischen und aromatischen Kohlenwasserstoffharze, Terpenharze und Terpenphenolharze sowie C5-, C9- sowie andere Kohlenwasserstoffharze. Beliebige Kombinationen dieser und weiterer Harze können eingesetzt werden, um die Eigenschaften der resultierenden Klebmasse wunschgemäß einzustellen. Im allgemeinen lassen sich alle mit dem entsprechenden Blockcopolymer kompatiblen (löslichen) Harze einsetzen, insbesondere sei verwiesen auf alle aliphatischen, aromatischen, alkylaromatischen Kohlenwasserstoffharze, Kohlenwasserstoffharze auf Basis reiner Monomere, hydrierte Kohlenwasserstoffharze, funktionelle Kohlenwasserstoffharze sowie Naturharze. Auf die Darstellung des Wissensstandes im "Handbook of Pressure Sensitive Adhesive Technology" von Donatas Satas (van Nostrand, 1989) sei ausdrücklich hingewiesen.

Weiterhin können optional Weichmacher (Plastifizierungsmittel), Füllstoffe (z.B. Fasern, Ruß, Zinkoxid, Titandioxid, Kreide, Voll- oder Hohlglaskugeln, Mikrokugeln aus anderen Materialien, Kieselsäure, Silikate), Keimbildner, Blähmittel, Compoundierungsmittel und/oder Alterungsschutzmittel, z.B. in Form von primären und sekundären Antioxidantien oder in Form von Lichtschutzmitteln zugesetzt sein.

Zusätzlich können Vernetzer und Promotoren zur Vernetzung beigemischt werden. Geeignete Vernetzer für die UV-Vernetzung sind beispielsweise bi- oder multifunktionelle Acrylate und Methacrylate.

Für die Vernetzung mit UV-Licht können den Blockcopolymeren zusätzlich UVabsorbierende Photoinitiatoren zugesetzt werden. Nützliche Photoinitiatoren, welche sehr gut zu verwenden sind, sind Benzoinether, wie z. B. Benzoinmethylether und Benzoinisopropylether, substituierte Acetophenone, wie z. B. 2,2-Diethoxyacetophenon (erhältlich als Irgacure 651® von Fa. Ciba Geigy®), 2,2-Dimethoxy-2-phenyl-1-phenyl-ethanon, Dimethoxyhydroxyacetophenon, substituierte α-Ketole, wie z. B. 2-Methoxy-2-hydroxypropiophenon, aromatische Sulfonylchloride, wie z. B. 2-Naphthyl sulfonylchlorid, und photoaktive Oxime, wie z. B. 1-Phenyl-1,2-propandion-2-(O-ethoxycarbonyl)oxim.

Die oben erwähnten und weitere einsetzbare Photoinititatiorén und andere vom Typ Norrish I oder Norrish II können folgenden Reste enthalten: Benzophenon-, Acetophenon-, Benzil-, Benzoin-, Hydroxyalkylphenon-, Phenylcyclohexylketon-, Anthrachinon-, Trimethylbenzoylphosphinoxid-, Methylthiophenylmorpholinketon-, Aminoketon-, Azobenzoin-, Thioxanthon-, Hexarylbisimidazol-, Triazin-, oder Fluorenon, wobei jeder dieser Reste zusätzlich mit einem oder mehreren Halogenatomen und/oder einer oder mehreren Alkyloxygruppen und/oder einer oder mehreren Aminogruppen oder Hydroxygruppen substituiert sein kann. Ein repräsentativer Überblick wird von Fouassier: "Photoinititation, Photopolymerization and Photocuring: Fundamentals and Applications", Hanser-Verlag, München 1995, gegeben. Ergänzend kann Carroy et al. in "Chemistry and Technology of UV and EB Formulation for Coatings, Inks and Paints", Oldring (Hrsg.), 1994, SITA, London herangezogen werden.

Zur Herstellung von Haftklebebändem werden die oben beschriebenen Polymere bevorzugt als Hotmelt-Systeme (Heißschmelzsysteme) beschichtet. Für das Herstellungsverfahren kann es daher erforderlich sein, das Lösemittel von der Haftklebemasse zu entfernen. Bei einer vorteilhaften Variante des erfindungsgemäßen Verfahrens findet daher zumindest einen Aufkonzentrationsschritt zwischen der Polymerisation und der Beschichtung aus der Schmelze statt. Es können im Prinzip alle dem Fachmann bekannten Verfahren eingesetzt werden. Ein sehr bevorzugtes Verfahren ist die Aufkonzentration über einen Ein- oder Doppelschneckenextruder. Der Doppelschneckenextruder kann gleich- oder gegenläufig betrieben werden. Das Lösemittel oder Wasser wird bevorzugt über mehrere Vakuumstufen abdestilliert. Zudem wird je nach Destillationstemperatur des Lösemittels gegengeheizt. Die Restlösemittelanteile betragen bevorzugt < 1 %, mehr bevorzugt < 0.5 % und sehr bevorzugt < 0.2 %. Der Hotmelt wird aus der Schmelze weiterverarbeitet.

Zur Beschichtung als Hotmelt können unterschiedliche Beschichtungsverfahren herangezogen werden. Die Beschichtung kann sowohl auf einen permanenten als auch auf einen temporären Träger geschehen.
In einer bevorzugten Ausführung werden die Blockcopolymere über ein Walzenbeschichtungsverfahren beschichtet. Unterschiedliche Walzenbeschichtungs-verfahren sind im Handbook of Pressure Sensitive Adhesive Technology" von Donatas Satas (van Nostrand, New York 1989) beschrieben. In einer weiteren Ausführung wird über eine Schmelzdüse beschichtet. Hier kann zwischen dem Kontakt und dem kontaktlosen Verfahren unterschieden werden. Der Film kann hier zum einen durch das Düsendesign innerhalb der Beschichtungsdüse erzeugt werden oder wiederum durch einen Reckprozess nach dem Düsenaustritt.

In einem weiteren bevorzugten Verfahren wird mit der Extrusionsbeschichtung gearbeitet. Die Extrusionsbeschichtung wird bevorzugt mit einer Extrusionsdüse vorgenommen. Die verwendeten Extrusionsdüsen können aus einer der drei folgenden Kategorien stammen: T-Düse, Fischschwanz-Düse und Bügel-Düse. Die einzelnen Typen unterscheiden sich durch die Gestalt ihres Fließkanals. Durch die Form der Extrusionsdüse wird der Film der zu beschichtenden Haftklebemasse erzeugt.

In einer bevorzugten Variante wird mit einer Bügeldüse auf einen Träger beschichtet, und zwar derart, dass durch eine Relativbewegung von Düse zu Träger eine Haftklebeschicht auf dem Träger entsteht.

In einer bevorzugten Auslegung wird direkt auf ein Trägermaterial beschichtet. Als Trägermaterial sind prinzipiell alle dem Fachmann bekannten Materialien wie z.B. BOPP, PET, Vlies, PVC, Schaum oder Trennpapiere (Glassine, HDPE, LDPE) geeignet.

Vorteilhaft wird die Beschichtung bei Temperaturen von nicht mehr als 200 °C durchgeführt.

Nach der Beschichtung wird das Polymerisat auf dem (permanenten oder temporären) Träger unter Bestrahlung mit ultraviolettem Licht vernetzt.

Zur UV-Vernetzung wird mittels kurzzeitiger ultravioletter Bestrahlung in einem Wellenlängenbereich von 200 bis 400 nm (vorteilhaft eingestellt je nach verwendetem UV-Photoinitiator) bestrahlt, insbesondere unter Verwendung von Quecksilber-Hochdruck- oder -Mitteldruck-Lampen bei einer Leistung von 80 bis 240 W/cm. Die Bestrahlungsintensität wird der jeweiligen Quantenausbeute des UV-Photoinitiators, dem einzustellenden Vernetzungsgrad und zum Einstellen des Maßes der Orientierung angepasst.

Weiterhin ist es möglich, die Blockcopolymere mit Elektronenstrahlen zusätzlich zu vernetzen. Typische Bestrahlungsvorrichtungen, die zum Einsatz kommen können, sind Linearkathodensysteme, Scannersysteme bzw. Segmentkathodensysteme, sofern es sich um Elektronenstrahlbeschleuniger handelt. Eine ausführliche Beschreibung des Stands der Technik und die wichtigsten Verfahrensparameter findet man bei Skelhorne, Electron Beam Processing, in Chemistry and Technology of UV and EB formulation for Coatings, Inks and Paints, Vol. 1, 1991, SITA, London. Die typischen Beschleunigungsspannungen liegen im Bereich zwischen 50 kV und 500 kV, vorzugsweise 80 kV und 300 kV. Die angewandten Streudosen bewegen sich zwischen 5 bis 150 kGy, insbesondere zwischen 20 und 100 kGy.

Blockcopolymere können auch als Zwischenprodukte bei dem vorstehend beschriebenen Verfahren erhältlich sein.

Gegenstand der Erfindung sind weiterhin solche Haftklebemassen, die über das vorstehend beschriebene Verfahren erhalten werden können, insbesondere solche, die mindestens zum Teil auf den wie vorstehend beschriebenen Blockcopolymeren basieren.

Die vernetzten Haftklebemassen weisen sehr bevorzugt Scherfestigkeiten von mindestens 200 Minuten bei 23 °C, gemessen nach dem nachfolgend beschriebenen Test D, auf.

Die Erfindung bietet die nicht vorhersehbaren Vorteile, hervorragend beschichtbare Polymere auf Blockcopolymerbasis - aufweisend Erweichungstemperaturen in schonenden Temperaturbereichen, das heißt in solchen, in denen keine Zersetzung des Polymers stattfindet - für Haftklebemassen verwenden zu können, da nach der Beschichtung und Anschließender Vernetzung gute Scherfestigkeits-Eigenschaften erzielt werden können. Gleichzeitig bietet die Erfindung die Möglichkeit, - im Gegensatz zu Haftklebemassen auf Blockcopolymerbasis gemäß des Standes der Technik - orientierungsfrei beschichten zu können.

Testmethoden

Gelpermeationschromatograpie (GPC) (Test A)

Die Bestimmung der mittleren Molekulargewichte $M_n$ (Zahlenmittel) und $M_w$ (Gewichtsmittel) und der Polydispersität D erfolgte durch Gelpermeationschromatographie. Als Eluent wurde THF mit 0,1 Vol.-% Trifluoressigsäure eingesetzt. Die Messung erfolgte bei 25 °C. Als Vorsäule wurde PSS-SDV, 5 $\mu$, $10^3$ Å, ID 8,0 mm x 50 mm verwendet. Zur Auftrennung wurden die Säulen PSS-SDV, 5 $\mu$, $10^3$ sowie $10^5$ und $10^6$ mit jeweils ID 8,0 mm x 300 mm eingesetzt. Die Probenkonzentration betrug 4 g/l, die Durchflußmenge 1,0 ml pro Minute. Es wurde gegen Polystyrol-Standards gemessen.

Differentialthermokalorimetrie (DSC) (Test B)

Die Messungen wurden mit einem dynamischen Leistungskompensations-Differenz-Kalorimeter der Firma Mettler Toledo durchgeführt. Die Messung erfolgten in einem Temperaturbereich von -150 °C bis 180 °C. Die Aufheizgeschwindigkeit beträgt dabei 10 °C/min. Es wurden jeweils zwei Aufheizkurven gemessen, wobei die zweite Aufheizkurve für die Bestimmung der Glasübergangstemperatur herangezogen wurde. Es wurde die onset-Glasübergangstemperatur bestimmt.

180° Klebkrafttest (Test C)

Die Bestimmung der Klebkraft erfolgte in Anlehnung an PSTC-101. Ein 20 mm breiter Streifen einer auf silikonisiertem Trennpapier beschichtete Haftklebemasse wurde auf eine 25 $\mu$m dicke mit einem Primer (Saran) versehende PET-Folie umlaminiert und anschließend dieses Haftklebebandmuster auf eine Stahlplatte aufgebracht. Die Stahlplatten wurden zuvor zweimal mit Aceton und einmal mit Isopropanol gewaschen. Der Haftklebestreifen wurde zweimal mit einem 2 kg Gewicht auf das Substrat aufgedrückt. Das Klebeband wurde anschließend sofort mit 30 mm/min und im 180° Winkel vom Substrat abgezogen. Die Messergebnisse sind in N/cm angegeben und stellen den Mittelwert aus drei Einzelmessungen dar. Alle Messungen wurden bei Raumtemperatur unter klimatisierten Bedingungen durchgeführt.

Scherstandzeiten (Test D)

Die Prüfung erfolgte gemäß PSTC-7. Auf eine 25 μm dicke PET-Folie wird eine 50 μm dicke Haftklebeschicht aufgebracht. Ein 1,3 cm breiter Streifen dieses Musters wird auf einem polierten Stahlplättchen auf einer Länge von 2 cm mit einer 2 kg-Rolle durch dreimaliges doppeltes Überrollen verklebt. Die Plättchen werden für 30 min unter Testbedingungen (Temperatur und Luftfeuchtigkeit), aber ohne Last equilibriert. Dann wird das Testgewicht angehängt, so dass eine Scherbeanspruchung parallel zur Verklebungsfläche entsteht, und die Zeit gemessen, bis die Verklebung versagt. Ist eine Haltezeit von 10.000 min erreicht, so wird der Versuch vor Versagen der Klebbindung abgebrochen.

Bestimmung des Gelanteils (Test E)

Die sorgfältig getrockneten lösungsmittelfreien Klebstoffproben werden in ein Vliestütchen aus Polyethylen (Tyvek-Vlies) eingeschweißt. Aus der Differenz der Probengewichte vor der Extraktion und nach der Extraktion durch Toluol wird der Gelwert bestimmt.

**Patentansprüche**

**1.** Verfahren zur Herstellung von vernetzten Haftklebemassen zumindest zum Teil auf Basis von Blockcopolymeren, welche zumindest eine polyvalente Thioether-Einheit aufweisen,
**dadurch** gekennzeichent, dass
mindestens die folgenden Verfahrensschritte durchgeführt werden

• zwei- oder mehrstufige radikalische Polymerisation zumindest zweier copolymerisierbarer Monomere in Gegenwart zumindest eines polyvalenten Merkaptans, wobei zumindest eines der Monomere derart funktionalisiert ist, dass es bei Bestrahlung mit ultravioletten Strahlen eine UV-Vernetzung initiiert, wobei bei der Polymerisation als Polymerisat Blockcopolymere mit zumindest einer polyvalenten Thioether-Einheit entstehen,
• Beschichtung des Polymerisats aus der Schmelze auf einen Träger,
• Vernetzung des Polymerisats auf dem Träger durch Bestrahlung mit ultravioletter Strahlung.

**2.** Verfahren nach Anspruch 1, **dadurch gekennzeichnet, dass** die Beschichtung bei Temperaturen von nicht mehr als 200 °C durchgeführt wird.

**3.** Verfahren nach zumindest einem der vorangehenden Ansprüche, **dadurch gekennzeichnet, dass**
die nicht vernetzten Polymerisationsprodukte mindestens zwei Glasübergangstemperaturen aufweisen, von denen zumindest die eine nicht höher als + 15 ° C liegt und die sich um mindestens 15 °C voneinander unterscheiden.

**4.** Verfahren nach zumindest einem der vorangehenden Ansprüche, **dadurch gekennzeichnet, dass**
die vernetzten Haftklebemassen eine Scherfestigkeit von mindestens 200 Minuten bei 23 °C, gemessen nach Test D, aufweisen.

**5.** Verfahren nach zumindest einem der vorangehenden Ansprüche, **gekennzeichnet durch** zumindest einen Aufkonzentrationsschritt zwischen der Polymerisation und der Beschichtung aus der Schmelze.

**6.** Haftklebemasse, erhältlich durch ein Verfahren nach einem der Ansprüche 1 bis 5.

**7.** Haftklebemasse nach Anspruch 6, **dadurch gekennzeichnet, dass** die Blockcoplymere durch die allgemeine Strukturformel

$$[R_{1,i} - P_{1,i} - S]_n - X - [S - P_{2,j} - R_{2,j}]_m$$

beschrieben werden können, wobei i eine Laufzahl von 1 bis n und j eine Laufzahl von 1 bis m ist und n und m jeweils ganze Zahlen darstellen,
wobei $P_{1,i}$ Polymersegmente aus einer Monomergruppe enthaltend erste Monomere A und/oder Copolymersegmente aus einer Monomergruppe enthaltend erste Monomere A und dritte Monomere C sind,
wobei die i Segmente $P_1$ unterschiedliche Längen und unterschiedliche chemische Zusammensetzungen aufweisen können,

$P_{2,j}$ Polymersegmente aus einer Monomergruppe enthalten zweite Monomere B und/oder Copolymersegmente aus einer Monomergruppe enthaltend zweite Monomere B und dritte Monomere C sind, wobei die j Segmente $P_2$ unterschiedliche Längen und unterschiedliche chemische Zusammensetzungen aufweisen können,

mit der Maßgabe, dass mindestens eines der Segmente $P_{1,i}$ und/oder $P_{2,i}$ einpolymerisierte Monomere C aufweist,

$R_{1,i}$ und $R_{2,j}$ die Segmente $P_{1,i}$ und $P_{2,j}$ abschließende Reste sind,

wobei weiterhin X eine Verknüpfungseinheit ist, wobei $X(S)_{n+m}$ eine polyvalente Thioethereinheit darstellt, wobei die Valenz mindestens n + m beträgt, **dadurch gekennzeichnet, dass** die Monomere C funktionelle Gruppen beinhalten, die bei Bestrahlung mit ultravioletten Strahlen eine UV-Vernetzung initiieren.

8. Haftklebemasse nach einem der Ansprüche 6 oder 7, **dadurch gekennzeichnet, dass**
das gewichtsmittlere Molekulargewicht $M_w$ der Blockcopolymere zwischen 2.000 und 4.000.000, besonders zwischen 20.000 und 1.000.000, ganz besonders zwischen 50.000 und 500.000 liegt, und/oder dass das gewichtsmittlere Molekulargewicht $M_w$ der Segmente $P_1$ und/oder $P_2$ zwischen 1.000 und 2.000.000, insbesondere zwischen 10.000 und 500.000 liegt.

9. Haftklebemasse nach einem der Ansprüche 6 bis 8, **dadurch gekennzeichnet, dass**
die Polymerblöcke $P_{1,i}$ und $P_{2,j}$ bei Raumtemperatur RT nicht homogen miteinander mischbar sind.

10. Haftklebemasse nach einem der Ansprüche 6 bis 9, **dadurch gekennzeichnet, dass**
als Monomere mit funktionellen Gruppen, die bei Bestrahlung mit ultravioletten Strahlen eine UV-Vernetzung initiieren, Photoinitiatoren mit einer copolymerisierbaren Doppelbindung eingesetzt werden, insbesondere Photoinitiatoren den Norrish-1- und/oder des Norrish-II-Typs, ganz besonders Benzoinacrylat und/oder acrylierte Benzophenone.

## Claims

1. Process for preparing crosslinked pressure-sensitive adhesives at least partly based on block copolymers comprising at least one polyvalent thioether unit, **characterized in that** at least the following process steps are carried out:

   • two-stage or multi-stage free-radical addition polymerization of at least two copolymerizable monomers in the presence of at least one polyvalent mercaptan, at least one of the monomers being functionalized such that on irradiation with ultraviolet rays it initiates a UV crosslinking,
   the polymerization producing block copolymers containing at least one polyvalent thioether unit,
   • coating of the polymer from the melt onto a backing,
   • crosslinking of the polymer on the backing by irradiation with ultraviolet radiation.

2. Process according to Claim 1, **characterized in that** the coating is carried out at temperatures of not more than 200°C.

3. Process according to at least one of the preceding claims, **characterized in that** the non-crosslinked polymerization products have at least two glass transition temperatures, of which at least one is not higher than +15°C, and which differ from one another by at least 15°C.

4. Process according to at least one of the preceding claims, **characterized in that** the crosslinked pressure-sensitive adhesives have a shear strength of at least 200 minutes at 23°C, measured in accordance with test D.

5. Process according to at least one of the preceding claims, **characterized by** at least one concentration step between the polymerization and the coating from the melt.

6. Pressure-sensitive adhesive obtainable by a process according to one of Claims 1 to 5.

7. Pressure-sensitive adhesive according to Claim 6, **characterized in that** the block copolymers can be described by the general structural formula

$$[R_{1,i} - P_{1,i} - S]_n - X - [S - P_{2,j} - R_{2,j}]_m$$

where i is a serial number from 1 to n and j is a serial number from 1 to m, and n and m are each integers,

where $P_{1,i}$ are polymer segments from a monomer group comprising first monomers A and/or copolymer segments from a monomer group comprising first monomers A and third monomers C, where the i segments $P_1$ can have different lengths and different chemical compositions,

where $P_{2,j}$ are polymer segments from a monomer group comprising second monomers B and/or copolymer segments from a monomer group comprising second monomers B and third monomers C, where the j segments $P_2$ can have different lengths and different chemical compositions,

with the proviso that at least one of the segments $P_{1,i}$ and/or $P_{2,i}$ contains copolymerized monomers C,

$R_{1,i}$ and $R_{2,j}$ are radicals capping the segments $P_{1,i}$ and $P_{2,j}$,

where additionally X is a linking unit, with $X(S)_{n+m}$ being a polyvalent thioether unit, the valency being at least n + m,

**characterized in that** the monomers C contain the functional groups which on irradiation with ultraviolet rays initiate a UV crosslinking.

8. Pressure-sensitive adhesive according to one of Claims 6 and 7, **characterized in that**
the weight-average molecular weight $M_w$ of the block copolymers is between 2000 and 4 000 000, in particular between 20 000 and 1 000 000, very particularly between 50 000 and 500 000, and/or **in that** the weight-average molecular weight $M_w$ of the segments $P_1$ and/or $P_2$ is between 1000 and 2 000 000, in particular between 10 000 and 500 000.

9. Pressure-sensitive adhesive according to one of Claims 6 to 8, **characterized in that**
the polymer blocks $P_{1,i}$ and $P_{2,j}$ are not homogeneously miscible with one another at room temperature RT.

10. Pressure-sensitive adhesive according to one of Claims 6 to 9, **characterized in that**
as monomers containing functional groups which are on irradiation with ultraviolet rays initiate a UV crosslinking use is made of photoinitiators having a copolymerizable double bond, in particular photoinitiators of the Norrish-I and/or Norrish-II type, very particularly benzoin acrylate and/or acrylated benzophenones.

## Revendications

1. Procédé de préparation de masses auto-adhésives réticulées au moins en partie à base de copolymères à blocs qui présentent au moins une unité thioéther polyvalente, **caractérisé en ce qu'**on réalise au moins les étapes de procédé suivantes

- une polymérisation radicalaire à deux ou plus de deux étapes d'au moins deux monomères copolymérisables en présence d'au moins un mercaptan polyvalent, au moins un des monomères étant fonctionnalisé de manière telle qu'il initie, lors d'une irradiation par des rayons ultraviolets, une réticulation UV, des copolymères à blocs contenant au moins une unité thioéther polyvalente étant formés lors de la polymérisation comme polymère,
- revêtement du polymère à partir de la masse fondue sur un support,
- réticulation du polymère sur le support par irradiation par un rayonnement ultraviolet.

2. Procédé selon la revendication 1, **caractérisé en ce que** le revêtement est réalisé à des températures qui ne sont pas supérieures à 200°C.

3. Procédé selon au moins l'une quelconque des revendications précédentes, **caractérisé en ce que** les produits de polymérisation non réticulés présentent au moins deux températures de transition vitreuse, dont au moins l'une n'est pas supérieure à +15°C et qui se distinguent d'au moins 15°C l'une de l'autre.

4. Procédé selon au moins l'une quelconque des revendications précédentes, **caractérisé en ce que** les masses autoadhésives réticulées présentent une résistance au cisaillement d'au moins 200 minutes à 23°C, mesurée selon le test D.

5. Procédé selon au moins l'une quelconque des revendications précédentes, **caractérisé par** au moins une étape d'augmentation de la concentration entre la polymérisation et le revêtement à partir de la masse fondue.

6. Masse autoadhésive, pouvant être obtenue par un procédé selon l'une quelconque des revendications 1 à 5.

7. Masse autoadhésive selon la revendication 6, **caractérisée en ce que** les copolymères à blocs peuvent être décrits par la formule de structure générale

$$[R_{1,i} - P_{1,i} - S]_n - X - [S - P_{2,j} - R_{2,j}]_m$$

i étant un numéro courant de 1 à n et j un numéro courant de 1 à m et n et m représentant à chaque fois des nombres entiers,

$P_{1,i}$ étant des segments polymères d'un groupe de monomères contenant des premiers monomères A et/ou des segments de copolymères d'un groupe de monomères contenant des premiers monomères A et des troisièmes monomères C,

les i segments $P_1$ pouvant présenter des longueurs différentes et des compositions chimiques différentes, $P_{2,j}$ étant des segments polymères d'un groupe de monomères contenant des deuxièmes monomères B et/ou des segments de copolymères d'un groupe de monomères contenant des deuxièmes monomères B et des troisièmes monomères C,

les j segments $P_2$ pouvant présenter des longueurs différentes et des compositions chimiques différentes, à condition qu'au moins un des segments $P_{1,i}$ et/ou $P_{2,i}$ présente des monomères C copolymérisés, $R_{1,i}$ et $R_{2,j}$ sont des radicaux terminant les segments $P_{1,i}$ et $P_{2,j}$,

X représentant en outre une unité de liaison, $X(S)_{n+m}$ représentant une unité thioéther polyvalente, la valence valant au moins n + m, **caractérisée en ce que** les monomères C comportent des groupes fonctionnels qui initient lors de l'irradiation par des rayons ultraviolets une réticulation UV.

8. Masse autoadhésive selon l'une quelconque des revendications 6 ou 7, **caractérisée en ce que** le poids moléculaire pondéral moyen $M_w$ des copolymères à blocs se situe entre 2000 et 4 000 000, en particulier entre 20 000 et 1 000 000, tout particulièrement entre 50 000 et 500 000, et/ou **en ce que** le poids moléculaire pondéral moyen $M_w$ des segments $P_1$ et/ou $P_2$ se situe entre 1000 et 2 000 000, en particulier entre 10 000 et 500 000.

9. Masse autoadhésive selon l'une quelconque des revendications 6 à 8, **caractérisée en ce que** les blocs polymères $P_{1,i}$ et $P_{2,j}$ à température ambiante RT ne sont pas miscibles de manière homogène l'un avec l'autre.

10. Masse autoadhésive selon l'une quelconque des revendications 6 à 9, **caractérisée en ce qu'**on utilise comme monomères comprenant des groupes fonctionnels, qui initient une réticulation UV lors d'une irradiation par des rayons ultraviolets, des photo-initiateurs présentant une double liaison copolymérisable, en particulier des photo-initiateurs du type Norrish-I et/ou Norrish-II, tout particulièrement de l'acrylate de benzoïne et/ou des benzophénones acrylées.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10030217
- DE 10036801
- DE 10149084
- EP 1081205 A
- US 2004072933 A

- JP SHOWA63132914 B
- JP HEISEI3190911 B
- JP HEISEI5500827 B
- EP 0686653 A

**In der Beschreibung aufgeführte Nicht-Patentliteratur**

- Synthese von Blockcopolymeren. **N. Hadjichriszichis ; S. Pispar ; G.A. Floudas.** Block Copolymers. Wiley, 2003
- Thermoplastic Elastomers. C. Hanser Verlag, 1996
- **Houben Weyl.** *Methoden der Organischen Chemie,* vol. E 19a, 60-147
- **von Donatas Satas.** Handbook of Pressure Sensitive Adhesive Technology. 1989

- **T.G. Fox.** *Bull. Am. Phys. Soc.,* 1956, vol. 1, 123
- **von Fouassier.** Photoinititation, Photopolymerization and Photocuring: Fundamentals and Applications. Hanser-Verlag, 1995
- **Carroy et al.** Chemistry and Technology of UV and EB Formulation for Coatings, Inks and Paints. SITA, London, 1994
- **Skelhorne.** Electron Beam Processing, in Chemistry and Technology of UV and EB formulation for Coatings, Inks and Paints. SITA, 1991, vol. 1